# EUROPEAN PATENT APPLICATION

(11) **EP 4 446 705 A1**
(43) Date of publication of application: **16.10.2024**
(21) Application number: 24169312.6
(22) Date of filing: 09.04.2024
(51) Int. Cl.: G01C 23/00, G08G 5/02

(54) **VISUAL INDICATION OF RUNWAY OVERRUN AWARENESS AND ALERTING SYSTEM STOPPING DISTANCES**

(30) Priority: 11.04.2023 US 202318133354
(71) Applicant: Rockwell Collins, Inc., Cedar Rapids, IA 52498 (US)
(72) Inventor: VANDERKAMP, Travis S., Marion, IA (US); LIUTKUS, Taylor L., Charlotte, NC (US); DAHLSTROM, Jason K., Marion, IA (US); JAMROK, Richard E., Cedar Rapids, IA (US)
(74) Representative: Dehns

(57) **Abstract**

A runway overrun awareness and alerting system determines a breaking distance based on aircraft capabilities, and renders a graphical depiction of that breaking distance. The graphical depiction may be separately rendered on a head-up display and a primary flight display. The system may determine both a maximum deceleration breaking distance and a nominal deceleration breaking distance. The maximum deceleration breaking distance and nominal deceleration breaking distance may be separately rendered, and may be rendered to include a visual indicator if they exceed some safety threshold.

## Description

### BACKGROUND

Stopping distance computation algorithms used to compute minimum distances in runway overrun awareness and alerting system are based on a maximum decelerate scenario. Maximum deceleration uses performance flight capabilities to calculate the stopping distance. Existing runway overrun awareness and alerting system solutions provide audio warnings but no visual display indication of potential runway overrun conditions. Such a visual display would be advantageous for situational awareness.

### SUMMARY

In one aspect, embodiments of the inventive concepts disclosed herein are directed to a runway overrun awareness and alerting system that determines a breaking distance based on aircraft capabilities, and renders a graphical depiction of that breaking distance.

In a further aspect, the graphical depiction may be separately rendered on a head-up display and a primary flight display.

In a further aspect, the system may determine both a maximum deceleration breaking distance and a nominal deceleration breaking distance. The maximum deceleration breaking distance and nominal deceleration breaking distance may be separately rendered.

In a further aspect, the maximum deceleration breaking distance and nominal deceleration breaking distance may be rendered to include a visual indicator if they exceed some safety threshold.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
FIG. 1 shows a block diagram of a system for implementing an exemplary embodiment;
FIG. 2A shows a representation of a graphic according to an exemplary embodiment;
FIG. 2B shows a representation of a graphic according to an exemplary embodiment;
FIG. 3A shows a representation of a graphic according to an exemplary embodiment;
FIG. 3B shows a representation of a graphic according to an exemplary embodiment;
FIG. 4 shows a flowchart of a method according to an exemplary embodiment;

### DETAILED DESCRIPTION

Before explaining various embodiments of the inventive concepts disclosed herein in detail, it is to be understood that the inventive concepts are not limited in their application to the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of a feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Also, while various components may be depicted as being connected directly, direct connection is not a requirement. Components may be in data communication with intervening components that are not illustrated or described.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in at least one embodiment" in the specification does not necessarily refer to the same embodiment. Embodiments of the inventive concepts disclosed may include one or more of the features expressly described or inherently present herein, or any combination or sub-combination of two or more such features.

Broadly, embodiments of the inventive concepts disclosed herein are directed to a runway overrun awareness and alerting system that determines a breaking distance based on aircraft capabilities, and renders a graphical depiction of that breaking distance. The graphical depiction may be separately rendered on a head-up display and a primary flight display. The system may determine both a maximum deceleration breaking distance and a nominal deceleration breaking distance. The maximum deceleration breaking distance and nominal deceleration breaking distance may be separately rendered, and may be rendered to include a visual indicator if they exceed some safety threshold.

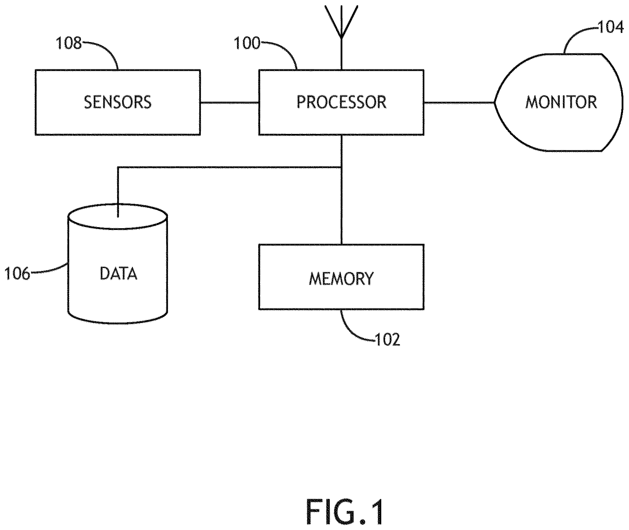

Referring to FIG. 1, a block diagram of a system for implementing an exemplary embodiment is shown. The system includes a processor 100 and memory 102 connected to the processor 100 to embody processor executable code. The processor 100 determines a stopping distance and renders a graphical representation of the stopping distance with respect to a corresponding runway on a monitor 104. The monitor 104 may comprise a head-up display, a primary flight display, or both. In at least one embodiment, the monitor 104 may comprise an augmented reality display. In such embodiment, the processor 100 may render an indication of the stopping distance to appear at a corresponding real-world location.

The processor 100 embodies a predictive performance-based model to calculate where the aircraft will stop under certain breaking conditions. The processor 100 may calculate separate predicted stopping distances based on auto break setting and based on maximum decelerate settings. The predictive model may be based on factors such as thrust reverser time, winds, current actual ground speed, current deceleration rate, etc.

In at least one embodiment, the system includes a data storage element 106 in data communication with the processor 100. The data storage element 106 may include aircraft specific data corresponding to aircraft capabilities (i.e., breaking performance). Furthermore, the data storage element 106 may include lookup tables to determine the stopping distance based on aircraft capabilities and environmental characteristics. In at least one embodiment, the systems may include various sensors 108 in data communication with the processor 100 (i.e., speed sensors, wind sensors, radar, etc.). The sensors 108 may provide the processor 108 with environmental data which may be used to determine the stopping distances in real time, either in connection with a stored lookup table or as an input to some predefined function. In at least one embodiment, the pilot may provide runway conditions, or runway conditions may be provided via a datalink to some external source.

In at least one embodiment, the processor 100 may be configured as a trained neural network or other machine learning system. In such embodiments, the system may be trained via data received from aircraft manufacturers, historically recorded performance data, flight test data, etc.

In at least one embodiment, the processor 100 may compare the determined stopping distance to some defined threshold and render the graphical representations with some indicia if the stopping distance exceeds the threshold. For example, the processor 100 may render a marker corresponding to the determined stopping distance at a relative location with respect to a runway in some color corresponding to the distance of the marker from the end of the runway.

In at least one embodiment, the processor 100 may receive a declared landing distance available (LDA) corresponding to a specific runway. The processor 100 may render the declared LDA on the monitor 104 (head-up display, a primary flight display, or both).

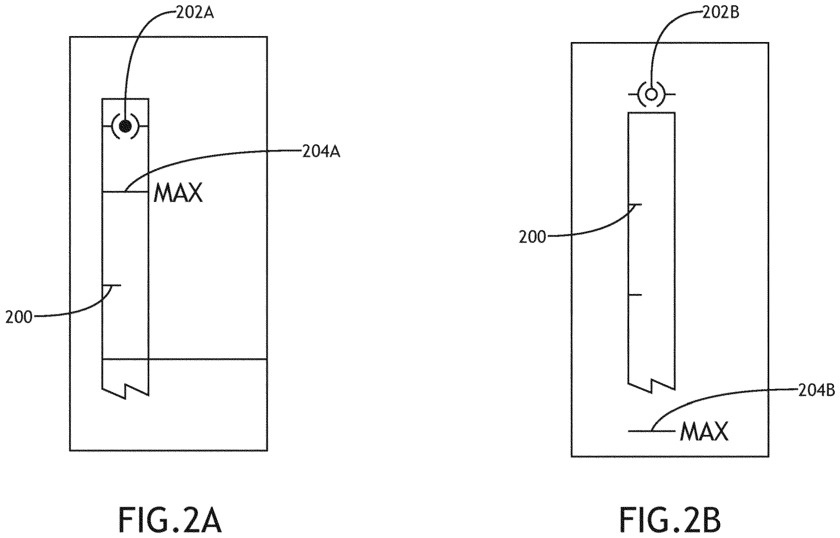

Referring to FIGS. 2A-2B, representations of a graphic according to exemplary embodiments are shown. A runway overrun awareness and alerting system may render a runway 200 or portion of a runway 200 (i.e., the last three thousand feet of the runway 200) on a primary flight display (as in FIG. 2A) and / or a head-up display (as in FIG. 2B). The system determines a stopping distance based on factors including aircraft parameters and environmental parameters, and renders indicators 202A, 202B, 204A, 204B of the stopping distance at relative locations of the runway 200. The indicators 202A, 202B, 204A, 204B define maximum deceleration cues indicating where the runway overrun awareness and alerting system calculates the best performance stopping point. Alerts are produced based on a comparison of this distance to the end of the runway. If the stopping distance is less than the scale of the displayed runway, the indicators 202A, 202B, 204A, 204B may be parked. Furthermore, the runway 200 may include indictors of the runway length being rendered; for example, markers may indicate thousand foot spans of the runway 200.

In at least one embodiment, the system may determine separate stopping distances for nominal deceleration (i.e., based on auto break settings, currently applied break capabilities, etc.) and for maximum deceleration (i.e., breaking plus reverse engine thrust). The system may then separately render nominal deceleration indicators 202A, 202B and maximum deceleration indicators 204A, 206B at corresponding locations along the runway 200. Furthermore, the runway 200 may include a marker corresponding to a declared LDA.

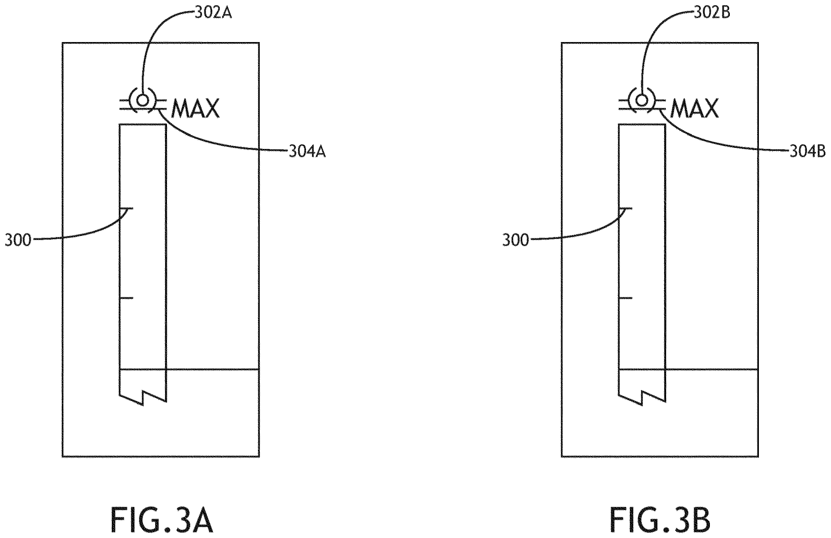

Referring to FIGS. 3A-3B, representations of a graphic according to exemplary embodiments are shown. Where a runway overrun awareness and alerting system renders a runway 300 or portion of a runway 300 on a display with nominal deceleration distance indicators 302A, 302B and / or maximum deceleration distance indicators 304A, 304B, such indicators 302A, 302B, 304A, 304B may be rendered with some obvious visual indicia if the indicator 302A, 302B, 304A, 304B exceeds some threshold. For example, the system may determine that even maximum deceleration will result in the aircraft overrunning the runway; in that case, the system may render the maximum deceleration distance indicators 304A, 304B in red or with some other intrusive aspect to increase pilot awareness. Likewise, the system may determine, under both nominal deceleration and maximum deceleration conditions, how close the aircraft will likely stop relative to the end of the runway 300, and render the corresponding indicators 302A, 302B, 304A, 304B accordingly. For example, if the aircraft is predicted to stop within the available runway distance, but within some threshold distance to the end of the runway 300, the system may render the corresponding indicators 302A, 302B, 304A, 304B in yellow.

In at least one embodiment, upon determining that the stopping distance exceeds a threshold, the system may provide visual warning that a go around is necessary or that maximum deceleration is necessary under a current set of conditions.

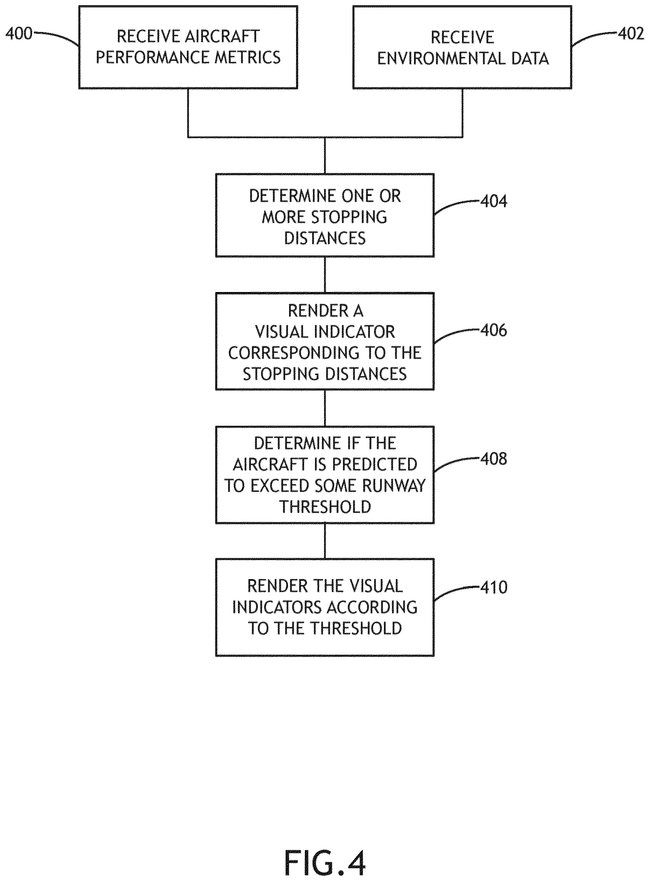

Referring to FIG. 4, a flowchart of a method according to an exemplary embodiment is shown. A runway overrun awareness and alerting system receives 400 aircraft performance metrics and determines / predicts 404 the aircrafts stopping distance for a particular runway. Visual depictions of the runway and predicted stopping distance are rendered 406 on a primary display monitor, head-up display, or both.

In at least one embodiment, the system may receive 402 environmental data from one or more local sensors, or from a remote data provider, or both. Such environmental data may be used in conjunction with precomputed lookup tables, defined functions, a trained machine learning algorithm, etc., to produce the predicted stopping distance.

In at least one embodiment, the system may determine 404 separate stopping distances based on disparate aircraft metrics. For example, the system may determine 404 a stopping distance based on some nominal deceleration procedure and a stopping distance based on a more aggressive breaking procedure. Both stopping distances may be separately rendered at corresponding locations with respect to the runway.

In at least one embodiment, the system may determine 408 if the aircraft is predicted to exceed some threshold distance along the runway and render 410 the visual depictions of the stopping distances according to such thresholds. For example, if a nominal deceleration distance exceeds the length of the runway or comes within some threshold distance of the end of the runway, the visual depiction of the nominal deceleration distance may be rendered in a distinct color or style or both.

It is believed that the inventive concepts disclosed herein and many of their attendant advantages will be understood by the foregoing description of embodiments of the inventive concepts, and it will be apparent that various changes may be made in the form, construction, and arrangement of the components thereof without departing from the broad scope of the inventive concepts disclosed herein or without sacrificing all of their material advantages; and individual features from various embodiments may be combined to arrive at other embodiments. The forms herein before described being merely explanatory embodiments thereof, it is the intention of the following claims to encompass and include such changes. Furthermore, any of the features disclosed in relation to any of the individual embodiments may be incorporated into any other embodiment.

## Claims

1. An avionics computer apparatus comprising:
at least one processor (100) in data communication with a memory storing processor executable code for configuring the at least one processor (100) to:
compute (404) a predicted stopping distance for an aircraft including the avionics computer apparatus;
render (406) a representation of at least a portion of a runway on at least one display;
determine (408) a location with respect to the representation corresponding to the predicted stopping distance; and
render (410) an indicator at the determined location.

2. The avionics computer apparatus of Claim 1, further comprising a plurality of sensors in data communication with the at least one processor (100), wherein computing the predicted stopping distance comprises receiving environmental data from the plurality of sensors.

3. The avionics computer apparatus of Claim 1 or 2, wherein:
the predicted stopping distance comprises a nominal stopping distance based on nominal deceleration conditions; and
the at least one processor (100) is further configured to:
compute a predicted maximum stopping distance based on maximum deceleration conditions;
determine a maximum deceleration location with respect to the representation corresponding to the predicted maximum stopping distance; and
render a maximum deceleration indicator at the determined maximum deceleration location.

4. The avionics computer apparatus of Claim 3, wherein the at least one processor (100) is further configured to:
determine if the maximum stopping distance exceeds a threshold value with respect to the runway; and
render the maximum deceleration indicator with a corresponding visual artifice, and optionally wherein the at least one processor (100) is further configured to render a visual warning that a go around is necessary based on the exceeded threshold.

5. The avionics computer apparatus of any preceding Claim, wherein the at least one processor (100) embodies a trained neural network configured to compute the predicted stopping distance, and/or wherein:
the representation of the runway and the indicator are separately rendered on both a primary flight display and a head-up display.

6. A method comprising:
computing a predicted stopping distance for an aircraft;
rendering a representation of at least a portion of a runway on at least one display;
determining a location with respect to the representation corresponding to the predicted stopping distance; and
rendering an indicator at the determined location.

7. The method of Claim 6, further comprising receiving environmental data from a plurality of sensors, wherein computing the predicted stopping distance comprises the environmental data.

8. The method of Claim 6 or 7, wherein:
the predicted stopping distance comprises a nominal stopping distance based on nominal deceleration conditions,
further comprising:
computing a predicted maximum stopping distance based on maximum deceleration conditions;
determining a maximum deceleration location with respect to the representation corresponding to the predicted maximum stopping distance; and
rendering a maximum deceleration indicator at the determined maximum deceleration location.

9. The method of Claim 8, further comprising:
determining if the maximum stopping distance exceeds a threshold value with respect to the runway; and
rendering the maximum deceleration indicator with a corresponding visual artifice, and optionally further comprising rendering a visual warning that a go around is necessary based on the exceeded threshold.

10. The method of Claim 6, wherein rendering the runway and indicator comprise separately rendering the runway and indicator on both a primary flight display and a head-up display.

11. A runway overrun alerting and awareness system comprising:
at least one processor (100) in data communication with a memory storing processor executable code for configuring the at least one processor (100) to:
compute a predicted stopping distance for an aircraft;
render a representation of at least a portion of a runway on at least one display;
determine a location with respect to the representation corresponding to the predicted stopping distance; and
render an indicator at the determined location.

12. The runway overrun alerting and awareness system of Claim 11, further comprising a plurality of sensors in data communication with the at least one processor (100), wherein computing the predicted stopping distance comprises receiving environmental data from the plurality of sensors.

13. The runway overrun alerting and awareness system of Claim 11 or 12, wherein:
the predicted stopping distance comprises a nominal stopping distance based on nominal deceleration conditions; and
the at least one processor (100) is further configured to:
compute a predicted maximum stopping distance based on maximum deceleration conditions;
determine a maximum deceleration location with respect to the representation corresponding to the predicted maximum stopping distance; and
render a maximum deceleration indicator at the determined maximum deceleration location.

14. The runway overrun alerting and awareness system of Claim 13, wherein the at least one processor (100) is further configured to:
determine if the maximum stopping distance exceeds a threshold value with respect to the runway; and
render the maximum deceleration indicator with a corresponding visual artifice, and optionally wherein the at least one processor (100) is further configured to render a visual warning that a go around is necessary based on the exceeded threshold.

15. The runway overrun alerting and awareness system of Claim 13, wherein the at least one processor (100) is further configured to render a declared landing distance available on the at least one display, and/or wherein:
the representation of the runway and the indicator are separately rendered on both a primary flight display and a head-up display.
